# EUROPEAN PATENT APPLICATION

(11) **EP 3 385 997 A1**
(43) Date of publication of application: **10.10.2018**
(21) Application number: 17164746.4
(22) Date of filing: 04.04.2017
(51) Int. Cl.: H01M 2/02, H01M 2/04, H01M 10/052, H01M 10/42, H01M 2/34

(54) **SECONDARY CELL FOR A TRACTION BATTERY AND METHOD FOR MANUFACTURING A SECONDARY CELL**

(71) Applicant: Lithium Energy and Power GmbH & Co. KG, 70469 Stuttgart (DE)
(72) Inventor: Pilz, Thomas, 71229 Leonberg (DE); Kaspar, Jan, 70806 Kornwestheim (DE); Grauer, Benjamin, 70563 Stuttgart (DE); Ohmer, Nils, 70569 Stuttgart (DE); Wedul, Eric, 71638 Ludwigsburg (DE)
(74) Representative: Bee, Joachim

(57) **Abstract**

The invention relates to a secondary cell (1) for a traction battery, comprising: a prismatic casing (2) having an aperture (3) at one side and being at least partly electrically conductive; at least one electrochemical cell (4) contained within the casing (2) and comprising at least one anode current collector (5) and at least one cathode current collector (6), wherein both current collectors (5, 6) are arranged on one side of the electrochemical cell (4) accessible through the aperture (3) of the casing (2); at least one electrically conductive connecting element (7) electrically connecting one current collector (5, 6) with the casing (2); at least one electrically non-conductive insulating element (9) arranged on a side of the connecting element (7) facing away from the electrochemical cell (4); at least one electrically conductive member (11) electrically connected with the other current collector (5, 6) and arranged on a side of the insulating element (9) facing away from the electrochemical cell (4); and at least one fast discharge device (12) for discharging the electrochemical cell (4) when the electrochemical cell (4) is in an abnormal state and being electrically connected with the connecting element (7) and the electrically conductive member (11), wherein the fast discharge device (12) is arranged in a hermetically sealed cavity (15) defined by the connecting element (7), the electrically conductive member (11) and an opening (13) of the insulating element (9).

## Description

### Prior Art

The invention relates to a secondary cell for a traction battery of a vehicle and a method for manufacturing a secondary cell for a traction battery of a vehicle.

Recently, secondary cells, such as lithium ion cells, are used in different applications. For example, secondary cells are installed in electric vehicles and hybrid electric vehicles to supply electric drive units of such vehicles with electric power. Several secondary cells can be combined with each other to form a battery module of a modular battery. The secondary cells of such a battery module are connected in series or in parallel. The battery modules are connected in series in one or more strings to form the modular battery.

High energy densities of secondary cells are intended for increasing the cruising range of a vehicle and to reduce costs. But generally, in case of an error, lithium ion secondary cells with high energy densities establish higher reaction kinetics. To prevent error events like a so called thermal runaway of a secondary cell in case of an error, for example an internal short circuit or a nail penetration of a secondary cell, the secondary cell can be brought in a safe state by means of a fast discharge device which discharges the secondary cell in case of an error very quickly. A principal requirement for such a fast discharge of a secondary cell is a very small electrical resistance along a whole external fast discharge short circuit path between an anode and a cathode of the secondary cell. Preferably, the electrical resistance of such a fast discharge path is less than 100 µΩ.

US 2013/344353 A1 discloses secondary battery with a protective circuit module including a rechargeable bare cell having a first electrode and a second electrode and a protective circuit module having a protective circuit for the rechargeable bare cell. A conductive bonding layer is located on the protective circuit module and a secondary protective element assembly is attached to the protective circuit module by the conductive bonding layer. A first lead plate electrically connects the secondary protective element assembly to the first electrode, and a second lead plate electrically connects the protective circuit module to the second electrode.

KR 2013/0080331 A discloses a package module of a battery protection circuit including protection circuit areas in which plural manual elements, a first inner connection terminal area, a second inner connection terminal area, an external connection terminal area, a protection IC, a first FET chip, and a second FET chip are arranged. The first and second inner connection terminal areas include the first and second inner connection terminals which are connected to a battery can comprising a bare cell. The external connection terminal area is closely located on the first inner connection terminal area, and plural external connection terminals and the manual elements are arranged in the external connection terminal area to form the battery protection circuit. The external connection terminals are exposed to the upper surface, and the first and second inner connection terminals are exposed to the lower surface.

It is known to place a fast discharge device outside of a cell casing of a secondary cell and to connect the fast discharge device by welding to cell terminals and/or cell casings being electrically connected with one electrode of an electrochemical cell contained within the cell casing. Such an external connection of a fast discharge device to a secondary cell reduces the volume occupancy of a battery module, since module space that could be used for secondary cells is occupied with the external fast discharge devices. Further, for an external connection of the fast discharge device to a secondary cell, a relative large amount of copper is required for large and a low electrical resistance bus bars for said connection. Moreover, when a fast discharge device is externally connected with a secondary cell, the electric fast discharge path is quite long. This restricts a fast discharge performance.

### Disclosure of the invention

It is an object of the present invention to provide a secondary cell for a traction battery of a vehicle with such a cell design that a fast discharge path with very low electrical resistance can be established in case of an error.

This object is solved by the independent claims. Advantageous embodiments are disclosed in the following description, the dependent claims and the drawings, wherein these embodiments either by taken alone or in any combination of at least two embodiments with each other may relate to a preferred or advantageous aspect of the present invention. Embodiments of the secondary cell may be embodiments of the method and vice versa, even if this is not explicitly disclosed in the following.

A secondary cell according to the present invention for a traction battery of a vehicle comprises: a prismatic casing having an aperture at one side and being at least partly electrically conductive; at least one electrochemical cell contained within the casing and comprising at least one anode current collector and at least one cathode current collector, wherein both current collectors are arranged on one side of the electrochemical cell accessible through the aperture of the casing; at least one electrically conductive connecting element electrically connecting one current collector with the casing; at least one electrically non-conductive insulating element arranged on a side of the connecting element facing away from the electrochemical cell; at least one electrically conductive member electrically connected with the other current collector and arranged on a side of the insulating element facing away from the electrochemical cell; and at least one fast discharge device for discharging the electrochemical cell when the electrochemical cell is in an abnormal state and being electrically connected with the connecting element and the electrically conductive member, wherein the fast discharge device is arranged in a hermetically sealed cavity defined by the connecting element, the electrically conductive member and an opening of the insulating element.

According to the present invention the fast discharge device is integrated within a layer structure of the secondary cell without the need for further constructed space for arrangement of the fast discharge device. Instead, with the present invention, the constructed space for arrangement of the fast discharge device is achieved by providing the opening within the insulating element and by closing the opening with the connecting element and the electrically conductive member, respectively. The connecting element and/or the electrically conductive member can be sealed against the insulating element for providing the hermetically sealed cavity for accommodating the fast discharge device. For this purpose, at least one O-ring seal or at least one insulating adhesive bonding may be provided between the connecting element and the insulating element and/or the electrically conductive member and the insulating element, respectively. Therefore, the hermetically sealed cavity is defined by the connecting element, the electrically conductive member and an opening of the insulating element. The fast discharge device in the hermetically sealed cavity from an electrolyte of the secondary cell. The fast discharge current path between the electrodes of the electrochemical cell via the fast discharge device does not include the cell casing. The described layer structure including the fast discharge device of the secondary cell according to the present invention can have a very small thickness, e. g. a thickness of less than 1 mm.

Because the fast discharge device is arranged within the secondary cell structure and does not need additional constructed space, the volume utilization, and therefore the energy density, of the secondary cell according to the present invention is very high. Through this, also a battery module constituted by secondary cells according to the present invention also has a high volume utilization and a high energy density.

Since the current collectors, the connecting element, the insulating element, the electrically conductive member and the fast discharge device are arranged on the same side of the electrochemical cell being accessible through the aperture of the casing, the fast discharge path, that can be established by the fast discharge device, the connecting element, the electrically conductive member and the current collectors, is relatively short, thereby making possible a very quick fast discharge of a large discharge current. Moreover, the fast discharge current path, which can be established according to the present invention, has a very low electric resistance, thereby further enhancing the fast discharge performance of the secondary cell according to the present invention.

The prismatic casing may be ashlar-shaped or may have triangular or other polygonal base and top surface areas. The aperture of the casing is arranged at an axial end surface of the casing. The casing may be manufactured by deep drawing or the like. The casing may at least partly be manufactured from a metal. The casing comprises or constitutes a terminal of the secondary cell.

The electrochemical cell may be a cell with stacked electrodes or a jelly roll cell. The secondary cell according to the present invention may alternately comprise two or more electrochemical cells contained within the casing, wherein homopolar current collectors of the individual electrochemical cells may be combined with each other to form a common current collector that can be electrically connected to one terminal of the secondary cell. The anode current collector can be directly or indirectly connected with the anode terminal of the secondary cell. The cathode current collector can be directly or indirectly connected with the cathode terminal of the secondary cell. When the secondary cell is discharged, the cathode current collector being electrically connected with the cathode of the electrochemical cell forms the positive polarized current collector, and the anode current collector being electrically connected with the anode of the electrochemical cell forms the negative polarized current collector. When the secondary cell is charged, the cathode current collector forms the negative polarized current collector, and the anode current collector forms the positive polarized current collector.

The electrically conductive connecting element is connected with the one current collector and with the casing. In particular, the connecting element is directly connected with the one current collector and with the casing. For example, the connecting element is connected with the cathode current collector and with the casing. The secondary cell according to the invention may comprise two or more connecting elements each connecting the one current collector and with the casing. Preferably, the secondary cell according to the present invention comprises only one connecting element connecting the one current collector with the casing.

The electrically non-conductive insulating element electrically insulates the connecting element from the electrically conductive member, and therefore, the electrodes of the electrochemical cell from one another. Moreover, the insulating element insulates the casing from the electrically conductive member. The insulating element is at least partly arranged between the connecting element and the electrically conductive member. The insulating element may be adhesively bonded to the connecting element and/or the electrically conductive member and/or to the casing. The insulating element may comprise at least one lateral recess through that the fast discharge device is accessible for electrically connecting the fast discharge device with the electrically conductive member.

The electrically conductive member can directly or indirectly be electrically connected with the other current collector, i. e. the current collector, which is not electrically connected with the connecting element. For example, the electrically conductive member is connected with the anode current collector. The electrically conductive member may constitute a terminal, e. g. the anode terminal, of the secondary cell. The secondary cell according to the invention may comprise two or more electrically conductive members each being electrically connected with the other current collector. Preferably, the secondary cell according to the present invention comprises only one electrically conductive member connected with the other current collector. For electrically connecting the fast discharge device with the electrically conductive member, the electrically conductive member may comprise at least one mounting through hole located in the area of the opening of the insulating element.

The fast discharge device establishes a fast discharge short circuit current path between the electrodes of the electrochemical cell, when the electrochemical cell is in an abnormal state. Therefore, the fast discharge device can bring the electrochemical cell very quickly in a safe discharged state. An abnormal state of the electrochemical cell is, for example, a state of the electrochemical cell, where heat is generated within the electrochemical cell which may cause a thermal runaway of the electrochemical cell. Such an abnormal state may be caused by an overcharging or deep charging of the electrochemical cell or by a defect or a damage of the electrochemical cell. For example, the electrochemical cell may be damaged by a metal object penetrating the electrochemical cell. Further, the electrochemical cell may have a defect in form of an internal short circuit. In each of these exemplary cases the electrochemical cell should be brought in a safe state, in particular to prevent explosion or firing of the electrochemical cell. The electrochemical cell can be brought in the safe state by fast discharging the electrochemical cell, so that heat generation in the electrochemical cell is suppressed. An abnormal state of the electrochemical cell can be detected, for example, through monitoring the cell voltage and/or the cell temperature of the electrochemical cell, e.g. by means of a battery management system. The fast discharge device may directly or indirectly be electrically connected with the connecting element and the electrically conductive member.

The vehicle may be an electric vehicle or a hybrid electric vehicle in form of a land vehicle, a water vehicle or an air vehicle.

According to an advantageous embodiment the one current collector is welded to the connecting element, the other current collector is welded to the electrically conductive member, and the connecting element is welded to the casing. These direct welding connections each have a very low electric resistance. This makes is possible to establish a fast discharge short circuit path between the electrodes of the electrochemical cell, so that the electrochemical cell according to the present invention could be brought very quickly in a safe state when an abnormal state of the electrochemical cell occurs. The respective welding connection may be achieved by laser welding, pressure welding, spot welding or the like.

According to a further advantageous embodiment the secondary cell comprises a cap being at least partly electrically conductive and welded to the electrically conductive member. The cap may be indirectly connected with the side of the casing comprising the aperture via the insulating element. The cap may comprise or constitute a further terminal of the secondary cell. For example, the cap may constitute an anode terminal of the secondary cell. The cap may be adhesively bonded to the insulating element. For electrically connecting the fast discharge device with the electrically conductive member, the cap may comprise at least one mounting through hole located in the area of the opening of the insulating element.

According to a further advantageous embodiment the connecting element is formed as a plate extending along the side of the electrochemical cell facing the insulating element and has at least one through hole through which the other current collector is guided without contacting the connecting element, the insulating element extends along a side of the connecting element facing the electrically conductive member and comprises at least one through hole aligned with the through hole of the connecting element, and the electrically conductive member is formed as a plate extending along a side of the insulating element facing away from the connecting element. Since the connecting element, the electrically conductive member and preferably also the insulating element are shaped like a plate, the layer structure constituted by these three components of the secondary cell can be very thin, thereby increasing the energy density of the secondary cell. Moreover, the plate-shaped design of the connecting element and the electrically conductive element ensures a sufficient large cross section area of the connecting element and the electrically conductive member, even when the connecting element and the electrically conductive member are very thin. Because the connecting element and the electrically conductive member are plate-shaped, a relative large contact area may be given between the respective current collector and the connecting element or the electrically conductive member, and between the fast discharge device and the connecting element and the electrically conductive member, so that the contact resistance of the respective connection can be very small. Moreover, the large contact areas each create a large welding contact area between the respective current collector and the connecting element or the electrically conductive member, so that the strength of these connections are enhanced. Furthermore, if the connecting element, the insulating element and the electrically conductive member each extend at least approximately along the whole side of the electrochemical cell comprising the current collectors, compression of the individual components of the layer structure of the secondary cell with each other during assembly of the secondary cell is easier because the compression is more uniform since no differences in the material strength exist in the different component layers, each being constituted by one component, i. e. the connecting element, the insulating element and the electrically conductive member, of the secondary cell. A further advantage of this embodiment is that no problems due to different coefficients of expansion within each layer occur.

According to a further advantageous embodiment the connecting element is an aluminum plate, and/or the electrically conductive member is a copper plate. The aluminum plate may be connected with an aluminum cathode current collector electrically connected with the cathode of the secondary cell. The copper plate may be connected with a copper anode current collector being electrically connected with the anode of the secondary cell.

According to a further advantageous embodiment the connecting element and the electrically conductive member are adhesively bonded to the insulating element. This is preferably, when the secondary cell does not comprise a cap and the electrically conductive member serves as a terminal of the secondary cell.

According to a further advantageous embodiment the insulating element comprises at least one clamping element for clamping the electrically conductive member to the insulating element. This is preferably, when a compression force generated by a cap of the secondary cell is insufficient for reliably fix the fast discharge device to the insulating element.

According to a further advantageous embodiment the fast discharge device comprises at least one first electrically conductive layer electrically connectable to the anode current collector; at least one second electrically conductive layer electrically connectable to the cathode current collector; at least one separator layer being arranged between the first electrically conductive layer and the second electrically conductive layer to electrically separate the electrically conductive layers from one another; at least one first solder layer which is at least partly arranged between the first electrically conductive layer and the separator layer; at least one electrically conductive safety layer which is at least partly arranged between the separator layer and the second electrically conductive layer; and at least one second solder layer which is at least partly arranged between the second electrically conductive layer and the safety layer, wherein the safety layer is formed so that, when a temperature of the safety layer exceeds a predetermined threshold temperature, an exothermic reaction of the safety layer material is triggered, and the separator layer changes its state of matter from solid to liquid or gas due to heat generated by the exothermic reaction.

When the separator layer changes its state of matter from solid to liquid or gas due to heat generated by the exothermic reaction of the material of the safety layer, a gap between the first solder layer and the safety layer is closed so that the solder of the first solder layer contacts the safety layer. The fluid or gaseous separator material is pushed aside with the first solder layer and/or the safety layer. Therefore, the first electrically conductive layer is electrically connected to the second electrically conductive layer via the molten or solid solder of the first solder layer, the safety layer and the second solder layer.

Since the laminar safety layer is electrically conductive, a relative large cross-section area is provided by the safety layer for conducting a relative large fast discharge current between the first electrically conductive layer and the second electrically conductive layer. Therefore, a large fast discharge current can flow in a very short time through the fast discharge device, thereby bringing the electrochemical cell as fast as possible in a safe discharged state.

The fast discharge device is a passive device. No additional activation device, such as an electronic or the like, is necessary to activate the fast discharge device. Therefore, the fast discharge device is inexpensive and space-saving and weight-saving.

The fast discharge device may comprise two or more first electrically conductive layers electrically connectable to the anode electrode of the electrochemical cell. Alternatively or additionally, the fast discharge device may comprise two or more second electrically conductive layers electrically connectable to the cathode electrode of the electrochemical cell. The number of first and/or second electrically conductive layers can be selected regarding the desired intensity of the fast discharge current. The first and/or the second electrically conductive layer may be a metal foil or a metal plate.

The fast discharge device may comprise two or more safety layers. The safety layer may be a foil or a plate.

The fast discharge device may comprise at least one sheathing at least partly accommodating the first electrically conductive layer, the second electrically conductive layer, the separator layer, the first solder layer, the safety layer and the second solder layer, wherein only a first laminar connecting lug electrically connected to the first electrically conductive layer and a second laminar connecting lug electrically connected to the second electrically conductive layer protrude from the sheathing. The sheathing may be bag-like and may be manufactured from a polyimide material being flexible, heat-resistant and chemically resistant. The laminar connecting lugs have a relative large cross-section area to enable a large fast discharge current to flow through the fast discharge device. A contact area between the respective connecting lug and the respective electrical component of the secondary cell may be relatively large due to the laminar shape of the respective connecting lug.

A method according to the present invention for manufacturing a secondary cell for a traction battery of a vehicle, comprises the steps of: providing a prismatic casing having an aperture at one side; providing at least one electrochemical cell having at least one anode current collector and at least one cathode current collector, wherein the current collectors are arranged on one side of the electrochemical cell; inserting the electrochemical cell in the casing so that the current collectors are accessible through the aperture of the casing; welding at least one electrically conductive connecting element to one current collector and to the casing; mounting an electrically non-conductive insulating element having at least one opening on a side of the connecting element facing away from the electrochemical cell, so that the opening is closed with the connecting element at the side of the insulating element facing the electrochemical cell; mounting or forming at least one fast discharge device in the opening of the insulating element and electrically connecting the fast discharge device with the connecting element; and mounting at least one electrically conductive member on a side of the insulating element facing away from the electrochemical cell, so that the opening of the insulating element is closed with the electrically conductive member at the side of the insulating element facing away from the electrochemical cell, and welding the electrically conductive member to the other current collector, and electrically connecting the electrically conductive member with the fast discharge device.

The above described advantages and embodiments of the secondary cell correspond to advantages and embodiments of the method. The secondary cell according to any one of the above described embodiments or a combination of at least two of these embodiments with each other may be manufactured using the method. The above order of features is not obligatory and other orders are possible, even if they are not explicitly disclosed.

According to an advantageous embodiment the fast discharge device is formed by the steps of: depositing at least one first solder layer on the side of the connecting element facing away from the electrochemical cell; depositing at least one second solder layer on the side of the electrically conductive member facing the electrochemical cell; placing at least one insulating separator layer between the solder layers; and placing at least one safety layer between the solder layers and connecting the safety layer with the separator layer, wherein the safety layer is formed so that, when a temperature of the safety layer exceeds a predetermined threshold temperature, an exothermic reaction of the safety layer material is triggered, and the separator layer changes its state of matter from solid to liquid or gas due to heat generated by the exothermic reaction. Therefore, the fast discharge device is not a separate component that is mounted to the other components of the secondary cell as a whole. Instead, the fast discharge device is assembled during assembling of other components of the secondary cell. Alternately, the fast discharge device is mounted to the other components of the secondary cell as a whole, wherein the fast discharge device may be electrically bonded to the connecting element and the electrically conductive member by welding, for example.

According to a further advantageous embodiment the connection element, the insulating element, the fast discharge device and the electrically connecting member are assembled to form an assembly group before the connecting element is welded to the one current collector and to the casing. Therefore, the assembly group can be prefabricated and mounted to the other components of the secondary cell as a whole. Through this, fabrication of secondary cells can be made easier and may be performed more quickly.

### Drawings

Further details, features and advantages of the invention are disclosed in the following description and the drawings showing:
- Figure 1: a schematic and perspective exploded view of an embodiment of a secondary cell according to the present invention; and
- Figure 2: a schematic cross section of a part of the secondary cell shown in Figure 1 of a secondary cell.

### Preferred embodiments of the invention

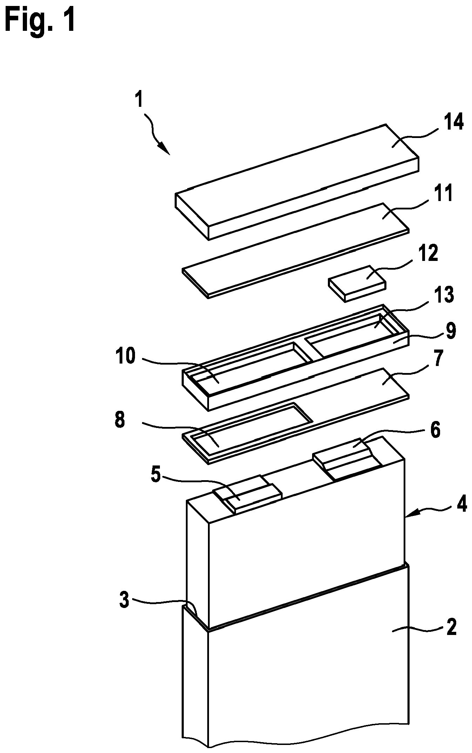

Figure 1 shows a schematic and perspective exploded view of an embodiment of a secondary cell 1 according to the present invention for a traction battery (not shown) of a vehicle (not shown).

The secondary cell 1 comprises a prismatic casing 2 having an aperture 3 at one side and being at least partly electrically conductive. The casing 2 is ashlar-shaped and may be manufactured by deep drawing.

Further, the secondary cell 1 comprises an electrochemical cell 4 contained within the casing 2 and comprising an anode current collector 5 and a cathode current collector 6. Both current collectors 5 and 6 are arranged on one side, i. e. the upper side in Figure 1, of the electrochemical cell 4 accessible through the aperture 3 of the casing 2.

Furthermore, the secondary cell 1 comprises an electrically conductive connecting element 7 electrically connecting the cathode current collector 6 with the casing 2. The cathode current collector 6 is welded to the connecting element 7. The connecting element 7 is welded to the casing 2. The connecting element 7 has a through hole 8 through which the anode current collector 5 is guided without contacting the connecting element 7.

Moreover, the secondary cell 1 comprises an electrically non-conductive insulating element 9 arranged on a side of the connecting element 7 facing away from the electrochemical cell 4. The insulating element 9 comprises a through hole 10 aligned with the through hole 8 of the connecting element 7. The connecting element 7 is formed as an aluminum plate extending along the side of the electrochemical cell 4 facing the insulating element 9 and has at least one through hole through which the other current collector is guided without contacting the connecting element.

Further, the secondary cell 1 comprises an electrically conductive member 11 electrically connected with the anode current collector 5 and arranged on a side of the insulating element 9 facing away from the electrochemical cell 4. The anode current collector 5 is welded to the electrically conductive member 11. The electrically conductive member 11 is formed as a copper plate extending along a side of the insulating element 9 facing away from the connecting element 7. The insulating element 9 extends along a side of the connecting element 7 facing the electrically conductive member 11. The connecting element 7 and the electrically conductive member 11 may be adhesively bonded to the insulating element 9. The insulating element 9 may comprise at least one clamping element (not shown) for clamping the electrically conductive member 11 to the insulating element 9.

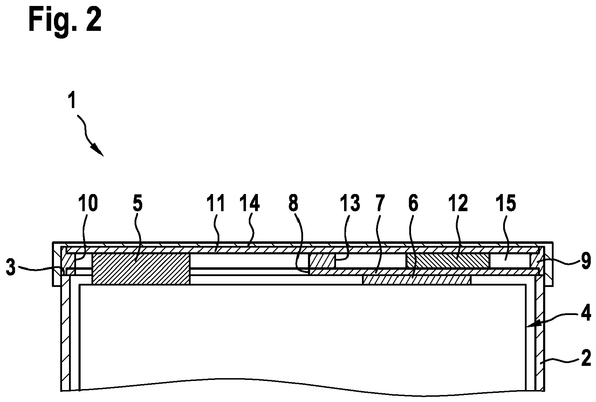

Additionally, the secondary cell 1 comprises a fast discharge device 12 for discharging the electrochemical cell 4 when the electrochemical cell 4 is in an abnormal state and being electrically connected with the connecting element 7 and the electrically conductive member 11. The fast discharge device 12 is arranged in a hermetically sealed cavity (shown in Figure 2) defined by the connecting element 7, the electrically conductive member 11 and an opening 13 of the insulating element 9.

The fast discharge device 12 may comprise: at least one first electrically conductive layer (not shown) electrically connectable to the anode current collector 5; at least one second electrically conductive layer (not shown) electrically connectable to the cathode current collector 6; at least one separator layer (not shown) being arranged between the first electrically conductive layer and the second electrically conductive layer to electrically separate the electrically conductive layers from one another; at least one first solder layer (not shown) which is at least partly arranged between the first electrically conductive layer and the separator layer; at least one safety layer (not shown) which is at least partly arranged between the separator layer and the second electrically conductive layer; and at least one second solder layer (not shown) which is at least partly arranged between the second electrically conductive layer and the safety layer. The safety layer may be formed so that, when a temperature of the safety layer exceeds a predetermined threshold temperature, an exothermic reaction of the safety layer material is triggered. The separator layer changes its state of matter from solid to liquid or gas due to heat generated by the exothermic reaction.

Moreover, the secondary cell 1 comprises a cap 14 being at least partly electrically conductive and welded to the electrically conductive member 11.

Figure 2 shows a schematic cross section of a part of the secondary cell 1 shown in Figure 1. Figure 2 shows the hermetically sealed cavity 15 defined by the connecting element 7, the electrically conductive member 11 and the opening 13 of the insulating element 9. Further, the different connections between components of the secondary cell 1 are shown in detail. Here, it is referred to the above description of Figure 1 to prevent repeated descriptions of components of the secondary cell 1 being the same as those shown in Figure 1.

## Claims

1. A secondary cell (1) for a traction battery of a vehicle, comprising:
- a prismatic casing (2) having an aperture (3) at one side and being at least partly electrically conductive;
- at least one electrochemical cell (4) contained within the casing (2) and comprising at least one anode current collector (5) and at least one cathode current collector (6), wherein both current collectors (5, 6) are arranged on one side of the electrochemical cell (4) accessible through the aperture (3) of the casing (2);
- at least one electrically conductive connecting element (7) electrically connecting one current collector (5, 6) with the casing (2);
- at least one electrically non-conductive insulating element (9) arranged on a side of the connecting element (7) facing away from the electrochemical cell (4);
- at least one electrically conductive member (11) electrically connected with the other current collector (5, 6) and arranged on a side of the insulating element (9) facing away from the electrochemical cell (4); and
- at least one fast discharge device (12) for discharging the electrochemical cell (4) when the electrochemical cell (4) is in an abnormal state and being electrically connected with the connecting element (7) and the electrically conductive member (11),
- wherein the fast discharge device (12) is arranged in a hermetically sealed cavity (15) defined by the connecting element (7), the electrically conductive member (11) and an opening (13) of the insulating element (9).

2. The secondary cell (1) according to claim 1, wherein
- the one current collector (5, 6) is welded to the connecting element (7),
- the other current collector (5, 6) is welded to the electrically conductive member (11), and
- the connecting element (7) is welded to the casing (2).

3. The secondary cell (1) according to claim 1 or 2, comprising a cap (14) being at least partly electrically conductive and welded to the electrically conductive member (11).

4. The secondary cell (1) according to any one of claims 1 to 3, wherein
- the connecting element (7) is formed as a plate extending along the side of the electrochemical cell (4) facing the insulating element (9) and has at least one through hole (8) through which the other current collector (5, 6) is guided without contacting the connecting element (7),
- the insulating element (9) extends along a side of the connecting element (7) facing the electrically conductive member (11) and comprises at least one through hole (10) aligned with the through hole (8) of the connecting element (7), and
- the electrically conductive member (11) is formed as a plate extending along a side of the insulating element (9) facing away from the connecting element (7).

5. The secondary cell (1) according to any one of claims 1 to 4, wherein
- the connecting element (7) is an aluminum plate, and/or
- the electrically conductive member (11) is a copper plate.

6. The secondary cell (1) according to any one of claims 1 to 5, wherein the connecting element (7) and the electrically conductive member (11) are adhesively bonded to the insulating element (9).

7. The secondary cell (1) according to any one of claims 1 to 6, wherein the insulating element (9) comprises at least one clamping element for clamping the electrically conductive member (11) to the insulating element (9).

8. The secondary cell (1) according to any one of claims 1 to 7, wherein the fast discharge device (12) comprises
- at least one first electrically conductive layer electrically connectable to the anode current collector (5);
- at least one second electrically conductive layer electrically connectable to the cathode current collector (6);
- at least one separator layer being arranged between the first electrically conductive layer and the second electrically conductive layer to electrically separate the electrically conductive layers from one another;
- at least one first solder layer which is at least partly arranged between the first electrically conductive layer and the separator layer;
- at least one safety layer which is at least partly arranged between the separator layer and the second electrically conductive layer; and
- at least one second solder layer which is at least partly arranged between the second electrically conductive layer and the safety layer,
- wherein the safety layer is formed so that, when a temperature of the safety layer exceeds a predetermined threshold temperature, an exothermic reaction of the safety layer material is triggered, and
- the separator layer changes its state of matter from solid to liquid or gas due to heat generated by the exothermic reaction.

9. A method for manufacturing a secondary cell (1) for a traction battery of a vehicle, comprising the steps of:
- providing a prismatic casing (2) having an aperture (3) at one side; and
- providing at least one electrochemical cell (4) having at least one anode current collector (5) and at least one cathode current collector (6), wherein the current collectors (5, 6) are arranged on one side of the electrochemical cell (4);
- inserting the electrochemical cell (4) in the casing (2) so that the current collectors (5, 6) are accessible through the aperture (3) of the casing (2); and
- welding at least one electrically conductive connecting element (7) to one current collector (5, 6) and to the casing (2);
- mounting an electrically non-conductive insulating element (9) having at least one opening (13) on a side of the connecting element (7) facing away from the electrochemical cell (4), so that the opening (13) is closed with the connecting element (7) at the side of the insulating element (9) facing the electrochemical cell (4);
- mounting or forming at least one fast discharge device (12) in the opening (13) of the insulating element (9) and electrically connecting the fast discharge device (12) with the connecting element (7); and
- mounting at least one electrically conductive member (11) on a side of the insulating element (9) facing away from the electrochemical cell (4), so that the opening (13) of the insulating element (9) is closed with the electrically conductive member (11) at the side of the insulating element (9) facing away from the electrochemical cell (4), and welding the electrically conductive member (11) to the other current collector (5, 6), and electrically connecting the electrically conductive member (11) with the fast discharge device (12).

10. The method according to claim 9, wherein the fast discharge device (12) is formed by the steps of:
- depositing at least one first solder layer on the side of the connecting element (7) facing away from the electrochemical cell (4);
- depositing at least one second solder layer on the side of the electrically conductive member (11) facing the electrochemical cell (4);
- placing at least one insulating separator layer between the solder layers; and
- placing at least one safety layer between the solder layers and connecting the safety layer with the separator layer, wherein the safety layer is formed so that, when a temperature of the safety layer exceeds a predetermined threshold temperature, an exothermic reaction of the safety layer material is triggered, and the separator layer changes its state of matter from solid to liquid or gas due to heat generated by the exothermic reaction.

11. The method according to claim 9 or 10, wherein the connection element (7), the insulating element (9), the fast discharge device (12) and the electrically connecting member (11) are assembled to form an assembly group before the connecting element (7) is welded to the one current collector (5, 6) and to the casing (2).
